# EUROPÄISCHE PATENTSCHRIFT

(11) **EP 2 406 877 B1**
(45) Veröffentlichungstag und Bekanntmachung des Hinweises auf die Patenterteilung: **24.10.2012**
(21) Anmeldenummer: 10705826.5
(22) Anmeldetag: 25.02.2010
(51) Int. Cl.: H02P 3/00, H02P 3/02, H02P 9/00, H02P 9/02, F03B 13/10

(54) **VERFAHREN UND VORRICHTUNG ZUM BREMSEN EINES UNTERWASSERKRAFTWERKS**
METHOD AND DEVICE FOR DECELERATING AN UNDERWATER POWER STATION
PROCÉDÉ ET DISPOSITIF DE FREINAGE D'UNE CENTRALE ÉLECTRIQUE SOUS-MARINE

(30) Priorität: 09.03.2009 DE 102009011784
(43) Veröffentlichungstag der Anmeldung: 18.01.2012
(73) Patentinhaber: Voith Patent GmbH, 89522 Heidenheim (DE)
(72) Erfinder: HOLSTEIN, Benjamin, 89518 Heidenheim (DE); PERNER, Norman, 89233 Neu-Ulm (DE); HÖLLE, Michael, 89555 Söhnstetten (DE); KRÜGER, Klaus, 73460 Hüttlingen (DE)
(74) Vertreter: Dr. Weitzel & Partner
(86) Internationale Anmeldenummer: PCT/EP2010/001156
(87) Internationale Veröffentlichungsnummer: WO 2010/102720

(56) Entgegenhaltungen:
- EP-A1- 1 909 373
- GB-A- 2 441 822
- US-A1- 2007 216 164
- US-A1- 2007 291 426

## Beschreibung

Die vorliegende Erfindung betrifft ein Verfahren und eine Vorrichtung zum Bremsen eines Unterwasserkraftwerks, insbesondere eines Gezeitenkraftwerks.

Unterwasserkraftwerke, die ohne Dammstrukturen freistehend einer Gewässerströmung kinetische Energie entnehmen und zur Stromerzeugung dienen, können in einem Fließgewässer oder an einem geeigneten Meeresstandort platziert werden. Letztere dienen der Energiegewinnung aus einer kontinuierlichen Meeresströmung oder einer zyklisch wechselnden Gezeitenströmung. Eine mögliche Ausführungsform einer solchen Anlage umfasst eine propellerförmig ausgebildete Wasserturbine, die als Horizontalläufer angelegt ist. Die Wasserturbine treibt einen elektrischen Generator an, der in einer Maschinengondel untergebracht ist, welche an einer auf dem Gewässergrund fundamentierten oder schwimmfähigen Stützstruktur befestigt ist.

Aufgrund der erschwerten Zugänglichkeit gattungsgemäßer, tauchender Unterwasserkraftwerke sind deren Komponenten möglichst wartungsfrei auszubilden. Dies betrifft unter anderem das zum Stilllegen der Wasserturbine verwendete Bremssystem. Wird zu diesem Zweck eine hydraulisch-mechanisch wirkende Bremse und insbesondere eine Scheibenbremse verwendet, ergeben sich mehrere konstruktive Schwierigkeiten. Zum einen wird aufgrund der voranstehend erläuterten Vorgaben im Hinblick auf die Standfestigkeit der Anlage und um die Problematik austretender Schmiermedien zu umgehen, auf den Einsatz von Getrieben im Antriebsstrang verzichtet. Hieraus folgt, dass eine mit einer langsam umlaufenden Einheit verbundene Scheibenbremse den gesamten Momenteneintrag durch die Wasserturbine beim Bremsen abfangen muss. Erschwerend kommt hinzu, dass für eine solche Bremse ein gegenüber der Außenumgebung abgedichteter Bereich zu schaffen ist, um die Problematik von Korrosion und Bewuchs für ein typischerweise nicht kontinuierlich verwendetes Bremssystem zu umgehen. Aus diesem Grund ergeben sich hohe konstruktive Anforderungen an ein für ein Unterwasserkraftwerk geeignetes hydraulischmechanisches Bremssystem, so dass zur Verbesserung der Betriebssicherheit vielfach ein weiteres, nur in Notfällen verwendetes Bremssystem vorgesehen wird. Diesbezüglich wird exemplarisch auf die GB 2441822 A verwiesen. Derartige Systeme sind jedoch typischerweise so angelegt, dass die Wiederaufnahme des Normalbetriebs nach dem Auslösen eines solchen Notbremssystems nicht ohne Weiteres möglich ist.

Des Weiteren kann zum Bremsen der Wasserturbine ein Blattwinkelverstellmechanismus verwendet werden, der im Normalbetrieb beim Erreichen der Nennleistung der Begrenzung des Leistungseintrags durch die Wasserturbine dient. Zum Bremsen werden die Blattwinkel so angestellt, dass über die Veränderung der Kennliniencharakteristik ein effektives Bremsen möglich wird. Ein Nachteil dieses Bremsverfahrens ist der konstruktive Aufwand zur Ausbildung einer Blattwinkelverstellung. Außerdem wird durch einen solchen Mechanismus ein zusätzliches Ausfallrisiko für die Anlage geschaffen. Dabei besteht im Fehlerfall einer falschen Blatteinstellung bei hoher Anströmungslast die Gefahr eines Turbinenblattverlusts. Des Weiteren setzt ein Blattwinkelverstellmechanismus aufgrund der verwendeten beweglichen Teile eine regelmäßige Instandhaltung voraus, die meist nur im Rahmen eines oberhalb des Wasserspiegels ausgeführten Services möglich ist.

Der Erfindung liegt daher die Aufgabe zugrunde, ein Verfahren und eine hierfür geeignete Vorrichtung anzugeben, die zum Abbremsen und Stillsetzen eines Unterwasserkraftwerks geeignet sind und insbesondere für einen Energiepark mit einer Vielzahl von Unterwasserkraftwerken verwendet werden können. Ferner soll sich die zur Ausführung des Bremsverfahrens verwendete Vorrichtung durch konstruktive Einfachheit sowie ein hohes Maß an Betriebssicherheit auszeichnen.

Die der Erfindung zugrunde liegende Aufgabe wird durch die Merkmale der unabhängigen Ansprüche gelöst. Vorteilhafte Ausgestaltungen ergeben sich aus den Unteransprüchen.

Zur Ausführung des erfindungsgemäßen Bremsverfahrens für ein Unterwasserkraftwerk wird das vom elektrischen Generator erzeugte Stützmoment verwendet Dabei wird von einer Anlagenkonfiguration mit einer drehstarren Verbindung zwischen dem Generatorläufer des elektrischen Generators und der Wasserturbine ausgegangen. Denkbar ist die Verwendung eines direkt getriebenen elektrischen Generators oder die Anordnung eines Übersetzungsgetriebes im Antriebsstrang zwischen der Wasserturbine und dem Generatorläufer, wobei sicherzustellen ist, dass ein vom elektrischen Generator aufgebrachtes Bremsmoment an die Wasserturbine weitergegeben wird.

Ein auf dem Stützmoment des elektrischen Generators beruhendes Bremsverfahren kann sowohl mit einem Synchron- als auch einem Asynchrongenerator ausgeführt werden, soweit dieser über eine Umrichterspeisung verfügt. Dabei muss der zur Umrichterspeisung verwendete Frequenzumrichter den Leistungsanforderungen beim Bremsbetrieb genügen. Um eine Überdimensionierung der verwendeten Frequenzumrichter ausschließen zu können, wird die Umrichterspeisung des elektrischen Generators erfindungsgemäß auf den Normalbetrieb ausgelegt und im Bremsbetrieb ein oder mehrere zusätzliche Frequenzumrichter oder deren generatorseitige Teilkomponenten, das heißt generatorseitige Gleichrichter, zugeschaltet. Nachfolgend wird hierfür der Begriff eines zweiten Frequenzumrichters verwendet, der mit dem ersten Frequenzumrichter, der beim Normalbetrieb die Umrichterspeisung übernimmt, synchronisiert wird und nach der Zuschaltung in Kombination mit diesem eine Umrichterspeisung des elektrischen Generators ausführt, welche ein die Wasserturbine bremsendes Generatormoment erzeugt.

Das Konzept eines zweiten Frequenzumrichters, der nur beim Bremsbetrieb zugeschaltet wird, ist insbesondere bei der Bündelung mehrerer Unterwasserkraftwerke zu einem Energiepark vorteilhaft, da als zweiter Frequenzumrichter ein oder mehrere Frequenzumrichter der nicht zu bremsenden Unterwasserkraftwerke herangezogen werden können. Für diese fällt als Folge die Umrichterspeisung und damit das Generatorstützmoment weg, so dass deren Wasserturbinen beschleunigen. Vorteilhafterweise werden aus diesem Grund die Unterwasserkraftwerke des Energieparks bis zur Durchgangsdrehzahl der Wasserturbinen schnelllauffest ausgebildet. In-diesem Fall kann ein für das Bremsen eines anderen Unterwasserkraftwerks herangezogenes Unterwasserkraftwerk im Leerlaufbetrieb unbeschadet hochlaufen, während dessen Frequenzumrichter als zweiter Frequenzumrichter den ersten Frequenzumrichter des zu bremsenden Unterwasserkraftwerks zur Ausführung des Bremsbetriebs unterstützt.

Für eine vorteilhafte Ausgestaltung ist die Wasserturbine des Unterwasserkraftwerks so gestaltet, dass die Leistungsabregelung beim Erreichen der Nennleistung nicht über einen Blattwinkelverstellmechanismus oder einen Strömungsabriss an den Turbinenblättern bewirkt wird. Stattdessen wird der Betriebspunkt in den Schnelllaufbereich oberhalb der leistungsoptimalen Drehzahl verlagert. Dies kann entweder durch eine Drehzahlführung oder mittels einer Momentenvorgabe für den elektrischen Generator bewirkt werden. Allerdings ergibt sich beim Stillsetzen der Anlage die Problematik, dass im Verlauf des Abbremsens der Wasserturbine der Bereich des Leistungsmaximums durchlaufen werden muss. Durch das erfindungsgemäße Verfahren besteht hierzu nicht die Notwendigkeit, den Frequenzumrichter mit einer entsprechenden Leistungsreserve auszulegen. Stattdessen ist dieser an den Normalbetrieb, das heißt an die Anlagennennleistung angepasst. Durch die Zuschaltung des zweiten beziehungsweise weiterer Frequenzumrichter zum ersten Frequenzumrichter im Falle des Bremsbetriebs wird der höhere Leistungseintrag beim Durchqueren des Leistungsmaximums sicher abgefangen.

Gemäß einer alternativen Ausgestaltung ist der zweite Frequenzumrichter eine Komponente, die ausschließlich beim Bremsbetrieb zum Einsatz kommt. Im Fall einer Einzelanlage stellt dieser zweite Frequenzumrichter für den Normalbetrieb eine redundante Komponente dar und kann im Fehlerfall den ersten Frequenzumrichter wenigstens kurzzeitig ersetzen, da der Bremsbetrieb vielfach eine in längeren Zeitintervallen ausgeführte und planbare Maßnahme darstellt. Ein besonderer Vorteil eines zusätzlichen, nur für den Bremsbetrieb genutzten Frequenzumrichters besteht bei einer Bündelung mehrerer Unterwasserkraftwerke zu einem Energiepark, wobei vorteilhafterweise eine Möglichkeit geschaffen ist, den zweiten Frequenzumrichter wahlweise mit jeder einzelnen Anlagen des Energieparks zu verbinden. Ferner ist es bei entsprechender Auslegung des zweiten Frequenzumrichters denkbar, mehr als ein Unterwasserkraftwerk des Energieparks zur gleichen Zeit zu bremsen. Für eine ökonomische Gestaltung wird jedoch der für das Bremsen zugeschaltete, zweite Frequenzumrichter auf die zusätzlich notwendige Leistungsreserve zum Bremsen einer Einzelanlage ausgelegt sein.

Nachfolgend wird die Erfindung anhand von Ausführungsbeispielen und im Zusammenhang mit Figurendarstellungen beispielhaft erläutert, die Folgendes darstellen:
- Figur 1: zeigt eine erste Ausgestaltung der Erfindung für zwei Unterwasserkraftwerke eines Energieparks mit verschaltbaren Frequenzumrichtern.
- Figur 2: zeigte eine Ausgestaltungsalternative mit einem separaten Frequenzumrichter, der für den Bremsbetrieb zuschaltbar ist.
- Figur 3: zeigt für eine durch Schelllauf leistungsbegrenzte Wasserturbine die beim Bremsen aufgenommene Leistung.

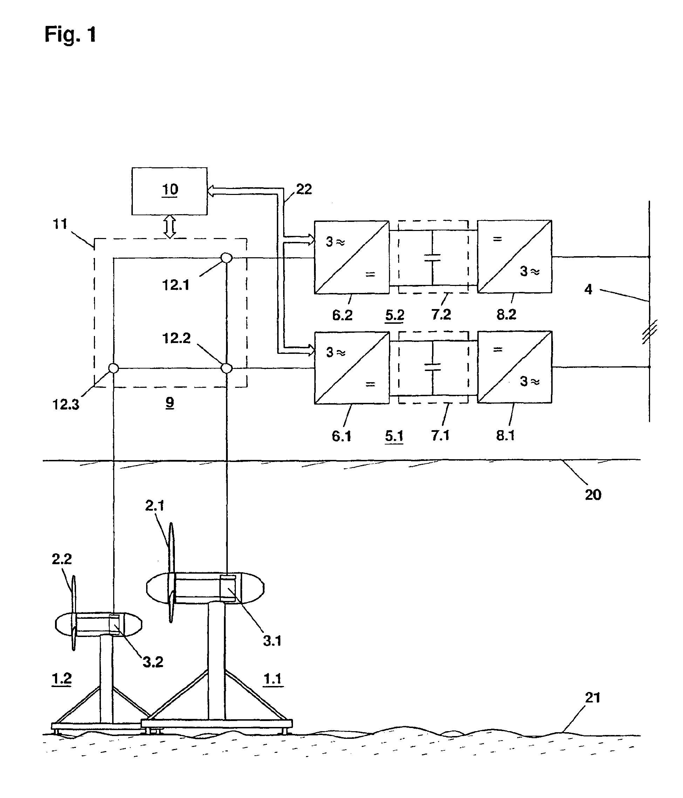

Figur 1 stellt schematisch vereinfacht zwei Unterwasserkraftwerke 1.1, 1.2 eines Energieparks dar. Diese sind als freistehende, vollständig unter dem Wasserspiegel 20 liegende und auf dem Gewässergrund 21 fundamentierte Einheiten ausgebildet. Jedes der Unterwasserkraftwerke 1.1, 1.2 umfasst eine Wasserturbine 2.1, 2.2, die drehstarr mit dem Generatorläufer eines zugeordneten elektrischen Generators 3.1, 3.2 verbunden ist. Dabei kommen insbesondere Synchrongeneratoren in Frage, die für den drehzahlvariablen Betrieb mittels eines Frequenzumrichters 5.1, 5.2 auf ein Verbundnetz 4 aufgeschaltet sind. Alternativ werden doppelt gespeiste Asynchrongeneratoren verwendet, die unter- und übersynchron zum Verbundnetz 4 betrieben werden können.

Vorliegend umfassen die Frequenzumrichter 5.1, 5.2 jeweils einen generatorseitigen Gleichrichter 6.1, 6.2, einen Gleichspannungszwischenkreis 7.1, 7.2 und einem netzseitigen Wechselrichter 8.1, 8.2. Für den Normalbetrieb wird der Frequenzumrichter 5.1 zur Umrichterspeisung des elektrischen Generators 3.1 des Unterwasserkraftwerks 1.1 verwendet. Er stellt gemäß der vorliegend verwendeten Terminologie den ersten Frequenzumrichter für das Unterwasserkraftwerk 1.1 dar. Entsprechend ist der Frequenzumrichter 5.2 der erste Frequenzumrichter für das Unterwasserkraftwerk 1.2 und wird somit für dessen Normalbetrieb verwendet.

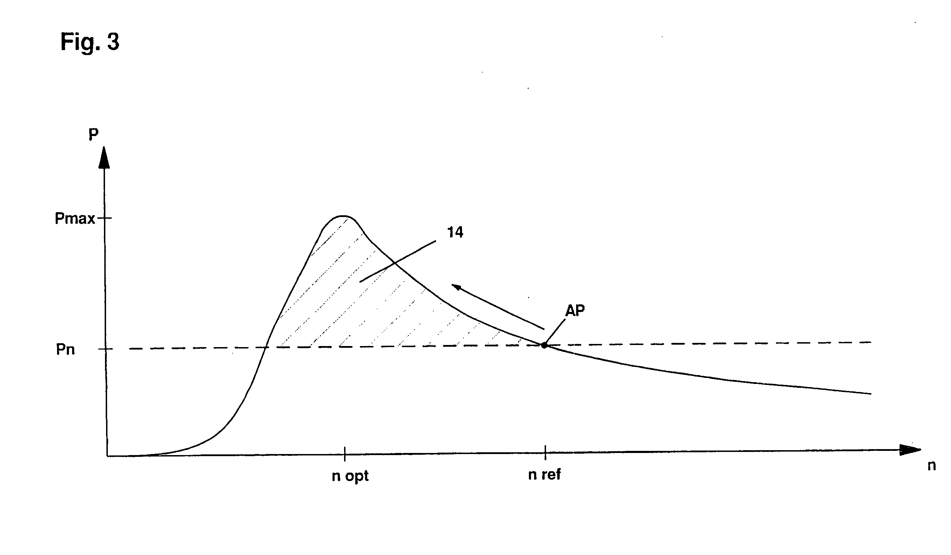

Anhand von Figur 3 ist ersichtlich, dass für ein durch Schnelllauf leistungsbegrenztes Unterwasserkraftwerk beim Bremsen der Wasserturbine 2.1, 2.2 eine über der Nennleistung Pₙ liegende Turbinenleistung P aufgenommen wird (schraffiert dargestellt). Dabei wird von einem Anlagenkonzept ausgegangen, das eine Wasserturbine ohne Blattwinkelverstellmechanismus vorsieht. Zur Leistungsbegrenzung wird durch eine Drehzahl- oder Momentenvorgabe die Wasserturbine zu einem Arbeitspunkt AP geführt, dessen zugeordnete Solldrehzahl n_{ref} über der leistungsoptimalen Drehzahl nₒₚₜ liegt. Mit der sich im Schnelllaufbereich abflachenden Leistungskennlinie wird die gewünschte Begrenzung auf die Nennleistung Pₙ bewirkt. Für eine solchermaßen gewählte Abregelung des Unterwasserkraftwerks 1.1, 1.2 wird erfindungsgemäß der erste Frequenzumrichter für den Normalbetrieb im Hinblick auf die Nennleistung Pₙ dimensioniert. Die beim Bremsen im Bereich des Leistungsmaximums Pₘₐₓ anfallende Überleisung wird durch das erfindungsgemäß vorgesehene Zuschalten eines zweiten Frequenzumrichters abgefangen. Für die Ausführung nach Figur 1 dient für diese Zuschaltung die Kopplungsvorrichtung 9. Diese umfasst eine Schalteinrichtung 11, die im Sinne eines Rangierverteilers als eine Matrix von Leistungsschaltern 12.1, 12. 2, 12.3 ausgebildet ist und beispielsweise elektronische Hochleistungschalter (Thyristoren, Triacs) oder mechanische Leistungstrennschalter umfasst. Des Weiteren ist der Kopplungsvorrichtung 9 eine Steuerungseinrichtung 10 zugeordnet, die dazu dient, die Schaltvorgänge in der Schalteinrichtung 11 zu tätigen und vor dem Schalten den für das Bremsen vorgesehenen zweiten Frequenzumrichter mit dem zu bremsenden elektrischen Generator 3.1, 3.2 zu synchronisieren. Hierzu sind in Figur 1 Datenleitungen 22 zwischen der Steuerungseinrichtung 10 und den Frequenzumrichtern 5.1, 5.2 skizziert.

Für den Fall, dass das Unterwasserkraftwerk 1.1 gebremst werden soll, wird zusätzlich zum ersten Frequenzumrichter 5.1 für diese Anlage als zweiter Frequenzumrichter der Frequenzumrichter 5. 2 des Unterwasserkraftwerks 1.2 eingesetzt. Dabei fällt für das nicht zu bremsende, zweite Unterwasserkraftwerk 1.2 die Umrichterspeisung und damit das Stützmoment des elektrischen Generators 3.2 weg. Als Folge wird die Wasserturbine 2.2 bis zur Durchgangsdrehzahl beschleunigen. Beim Bremsbetrieb wird über die Leitungsschalter 12.1, 12.2 nach der Synchronisierung eine Kopplung der Frequenzumrichter 5.1, 5.2 vorgenommen und ein die Wasserturbine 2.1 bis zum Stillstand abbremsendes Generatormoment erzeugt. Sodann kann das weitere Unterwasserkraftwerk 1.2 zum Arbeitspunkt AP zurückgeführt werden, indem über die Leistungsschalter 12.1, 12.2 der erneut synchronisierte Frequenzumrichter 5.2 zugeschaltet wird.

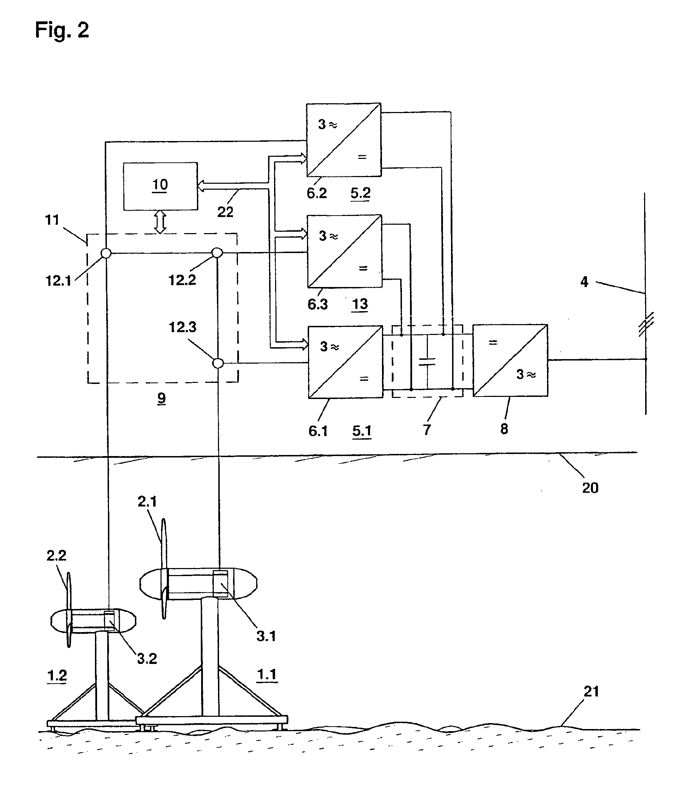

Figur 2 zeigt eine alternative Ausgestaltung der Erfindung mit einem separaten Frequenzumrichter 13, der ausschließlich als Leistungsreserve für den Bremsbetrieb verwendet wird. Eine weitere Abwandlung gegenüber der Ausführung nach Figur 1 stellt die Bündelung der generatorseitigen Umrichter 6.1, 6.2, 6.3 über einen gemeinsamen Gleichspannungszwischenkreis 7 und einen gemeinsamen netzseitigen Wechselrichter 8 dar, der wenigstens mittelbar auf das Verbundnetz 4 aufgeschaltet ist. Es bestehen folglich gemeinsame Teilkomponenten für die Frequenzumrichter 5.1, 5.2, 13, wobei die generatorseitigen Gleichrichter 6.1, 6.2, 6.3 entweder für den Normalbetrieb einem bestimmten Unterwasserkraftwerk zugeordnet sind oder zum separaten Frequenzumrichter gehören, der dem Bremsbetrieb dient. Im Sinne der vorliegend gewählten Begrifflichkeit werden die generatorseitigen Gleichrichter 6.1, 6.2, 6.3 als zweite generatorseitige Gleichrichter bezeichnet, wenn sie zur Ausführung eines verbindungsgemäßen Bremsverfahrens mit einem elektrischen Generator 3.1, 3.2 synchronisiert und diesem zusätzlich zugeschaltet werden, für dessen Umrichterspeisung sie im Normalbetrieb nicht vorgesehen sind.

Bezüglich der Anordnung der Frequenzumrichter 5.1, 5.2, 13 sind unterschiedliche Ausgestaltungen denkbar. Für ein erstes Ausführungsbeispiel sind diese im Trockenen, beispielsweise auf einer Plattform, in räumlicher Nähe zu den Unterwasserkraftwerken 1.1, 1.2 über dem Wasserspiegel 20 angeordnet. Alternativ kann ein landgestützter Standort vorgesehen sein. Für weitere Ausführungsformen sind die Frequenzumrichter 5.1, 5.2, 13 dezentral angelegt. Dabei können beispielsweise die generatorseitigen Gleichrichter 6.1, 6.2, 6.3 anlagennah, beispielsweise in der Maschinengondel des Unterwasserkraftwerks 1.1, 1.2 untergebracht sein, während die übrigen Komponenten, der Gleichspannungszwischenkreis 7, 7.1, 7.2 sowie die netzseitigen Wechselrichter 8, 8.1, 8.2 oberhalb des Wasserspiegels 20 und besonders bevorzugt in einer Servicestation an Land angeordnet sind.

Für eine Weitergestaltung der Erfindung werden die zweiten Frequenzumrichter, beziehungsweise deren zum Zuschalten vorgesehene Teilkomponenten, insbesondere die zweiten generatorseitigen Gleichrichter, zusätzlich zum Bremsen für die Leistungsoptimierung eines Energieparks eingesetzt. Insbesondere bei der Verwendung eines redundanten, separaten Frequenzumrichters 13 kann dieser beim Normalbetrieb dann zugeschaltet werden, wenn für einen ersten Frequenzumrichter 5.1, 5.2 Überlastgefahr besteht. Ferner ist es denkbar, die ersten Frequenzumrichter zur Energieoptimierung kurzzeitige im Überlastbereich zu fahren und einen redundanten, separaten Frequenzumrichter 13 jeweils für eine vorbestimmte Zeitdauer zuzuschalten, um eine Überhitzung des ersten Frequenzumrichters zu vermeiden. Sinkt die Betriebstemperatur des so unterstützten, ersten Frequenzumrichters unter einen Sollwert, kann der zweite, separate Frequenzumrichter 13 abgekoppelt und mit einer anderen Anlage des Energieparks verbunden werden. Des Weiteren kann ein zweiter, separater Frequenzumrichter 13 dann zugeschaltet werden, wenn beim generatorischen Betrieb für den Start einer Anlage eine hohe Leistungsreserve für die Frequenzumrichter notwendig ist.

Ferner sind Ausgestaltungen im Rahmen der nachfolgenden Schutzansprüche denkbar, für die beim Bremsen zusätzlich ein separater Frequenzumrichter 13 und ein oder mehrere erste Frequenzumrichter anderer Unterwasserkraftwerke in Kombination dienen. Außerdem kann das erfindungsgemäße Verfahren mit zusätzlichen, bekannten Bremsmethoden kombiniert werden. Des Weiteren kann eine zusätzliche hydraulisch-mechanische Bremse als Notsystem oder zum Sichern einer Anlage im Stillstand verwendet werden.

### Bezugszeichenliste

- 1.1, 1.2: Unterwasserkraftwerk
- 2.1, 2.2: Wasserturbine
- 3.1, 3.2: elektrischer Generator
- 4: Verbundnetz
- 5.1, 5.2: Frequenzumrichter
- 6.1, 6.2, 6.3: generatorseitiger Gleichrichter
- 7, 7.1, 7.2: Gleichspannungszwischenkreis
- 8.1, 8.2: netzseitiger Wechselrichter
- 9: Kopplungsvorrichtung
- 10: Steuerungseinrichtung
- 11: Schalteinrichtung
- 12.1, 12.2 12.3: Leistungsschalter
- 13: separater Frequenzumrichter
- 14: Überleistu ng
- 20: Wasserspiegel
- 21: Gewässergrund
- 22: Datenleitungen

- n: Drehzahl
- nₒₚₜ: leistungsoptimale Drehzahl
- n_{ref}: Solldrehzahl
- P: Turbinenleistung
- Pₙ: Nennleistung
- Pₘₐₓ: Leistungsmaximum

## Patentansprüche

1. Verfahren zum Betrieb eines Unterwasserkraftwerks (1.1, 1.2) umfassend eine Wasserturbine (2.1. 2.2) zur Aufnahme kinetischer Energie aus einer Gewässerströmung;
einen elektrischen Generator (3.1, 3.2) mit Umrichterspeisung, dessen Generatorläufer drehstarr mit der Wasserturbine (2.1, 2.2) verbunden ist; **dadurch gekennzeichnet, dass**
im Normalbetrieb ein erster Frequenzumrichter (5.1, 5.2) zur Umrichterspeisung verwendet wird und im Bremsbetrieb wenigstens ein zweiter Frequenzumrichter oder eine Teilkomponente eines zweiten Frequenzumrichters zugeschaltet und mit dem erster Frequenzumrichter (5.1, 5.2) synchronisiert wird, um mit diesem kombiniert eine Umrichterspeisung des elektrischen Generators (3.1, 3.2) auszuführen, welche ein die Wasserturbine (2.1, 2.2) bremsendes Generatormoment erzeugt.

2. Verfahren nach Anspruch 1, **dadurch gekennzeichnet, dass** im Normalbetrieb die Wasserturbine (2.1, 2.2) beim Erreichen der Nennlast Pₙ zur Leistungsbegrenzung in einen Drehzahlbereich gebracht wird, der oberhalb der leistungsoptimalen Drehzahl nₒₚₜ liegt.

3. Verfahren nach Anspruch 2, **dadurch gekennzeichnet, dass** die Gesamtheit der beim Bremsbetrieb zugeschalteten zweiten Frequenzumrichter oder der zugeschalteten Teilkomponenten der zweiten Frequenzumrichters so dimensioniert ist, dass die Leistungsvorgabe des elektrischen Generators (3.1, 3.2) an die Umrichterspeisung bei leistungsoptimaler Drehzahl erfüllt ist.

4. Verfahren nach einem der vorausgehenden Ansprüche, **dadurch gekennzeichnet, dass** das Unterwasserkraftwerk (1.1, 1.2) Teil eines Energieparks mit einer Vielzahl von Unterwasserkraftwerken (1.1, 1.2) ist, wobei der beim Bremsbetrieb zugeschaltete zweite Frequenzumrichter oder die zugeschaltete Teilkomponente eines zweiten Frequenzumrichters im Normalbetrieb der Umrichterspeisung eines weiteren Unterwasserkraftwerks des Energieparks dient.

5. Verfahren nach Anspruch 4, **dadurch gekennzeichnet, dass** für jene Unterwasserkraftwerke (1.1, 1.2), die einen zweiten Frequenzumrichter oder eine Teilkomponente eines zweiten Frequenzumrichters zum Abbremsen eines anderen Unterwasserkraftwerks stellen, eine Unterbrechung der Umrichterspeisung des elektrischen Generators (3.1, 3.2) eintritt, wodurch dessen Stützmoment wenigstens teilweise wegfällt.

6. Verfahren nach Anspruch 5, **dadurch gekennzeichnet, dass** für jene Unterwasserkraftwerke (1.1), deren Frequenzumrichter oder deren Teilkomponenten des Frequenzumrichters zum Ausführen eines Bremsbetriebs für ein anderes Unterwasserkraftwerk des Energieparks verwendet werden, mit einer wenigstens bis zur Durchgangsdrehzahl schnelllauffest ausgebildeten Wasserturbine (2.1, 2.2) ausgestattet sind.

7. Verfahren nach einem der vorausgehenden Ansprüche, **dadurch gekennzeichnet, dass** der zweite Frequenzumrichter oder die Teilkomponente des zweiten Frequenzumrichters ein separater Frequenzumrichter (13) ist, welcher im Normalbetrieb ungenutzt ist.

8. Verfahren nach Anspruch 7, **dadurch gekennzeichnet, dass** das Unter-wasserkraftwerk (1.1) Teil eines Energieparks ist und zusätzlich oder alternativ zum separaten Frequenzumrichter (13) wenigstens ein weiterer zweiter Frequenzumrichter oder eine weitere Teilkomponente eines zweiten Frequenzumrichters zur Ausführung des Bremsbetriebs von einem anderen Unterwasserkraftwerk (1.2) des Energieparks zugeschaltet wird.

9. Unterwasserkraftwerk (1.1, 1.2) umfassend
eine Wasserturbine (2.1, 2.2) zur Aufnahme kinetischer Energie aus einer Gewässerströmung;
einen elektrischen Generator (3.1, 3.2), dessen Generatorläufer drehstarr mit der Wasserturbine (2.1 ,2.2) verbunden ist;
eine Umrichterspeisung für den elektrischen Generator (3.1, 3.2) mit einem ersten Frequenzumrichter (5.1, 5.2);
**dadurch gekennzeichnet, dass**
das Unterwasserkraftwerk (1.1, 1.2) eine Kopplungsvorrichtung (9) umfasst, die beim Bremsbetrieb wenigstens einen zweiten Frequenzumrichter oder eine Teilkomponente eines zweiten Frequenzumrichters mit dem ersten Frequenzumrichter (5.1, 5.2) synchronisiert und der Umrichterspeisung des elektrischen Generators (3.1, 3.2) zuschaltet, um gemeinsam mit dem ersten Frequenzumrichter (5.1, 5.2) ein die Wasserturbine (2.1, 2.2) bremsendes Generatormoment zu erzeugen.

## Claims

1. A method for the operation of an underwater powerplant (1.1, 1.2), comprising
1.1 A water turbine (2.1, 2.2) for purposes of absorbing kinetic energy from a flow of water,
1.2 An electrical generator (3.1, 3.2) with converter feed, whose generator rotor is connected in a torsionally rigid manner with the water turbine (2.1, 2.2), **characterised in that**
1.3 In normal operation, a first frequency converter (5.1, 5.2) is used for purposes of converter feed, and **in that** in the braking operation at least one second frequency converter, or one component of a second frequency converter, is connected into the circuit and synchronised with the first frequency converter (5.1, 5.2), in order to execute in a combined manner with the latter a converter feed of the electrical generator (3.1, 3.2), which generates a generator torque that brakes the water turbine (2.1, 2.2).

2. The method in accordance with Claim 1,
**characterised in that** in normal operation the water turbine (2.1, 2.2), when it has reached the nominal load Pn, for purposes of power limitation is brought into a rotational speed regime that lies above the optimum power rotational speed n0.

3. The method in accordance with Claim 2,
**characterised in that** the overall system of the second frequency converter that is connected into the circuit, or the components of the second frequency converter that are connected into the circuit, during the braking operation, is dimensioned such that the specified performance of the electrical generator (3.1, 3.2) complies with the converter feed at the optimum power rotational speed.

4. The method in accordance with one of the preceding claims,
**characterised in that** the underwater powerplants (1.1,1.2) is part of an energy park with a multiplicity of underwater powerplants (1.1, 1.2), wherein the second frequency converter that is connected into the circuit, or the component of a second frequency converter that is connected into the circuit, during the braking operation, in normal operation serves to provide the converter feed for another underwater powerplant.

5. The method in accordance with Claim 4,
**characterised in that** for those underwater powerplants (1.1, 1.2), which provide a second frequency converter, or a component of a second frequency converter, for purposes of braking another underwater powerplant, an interruption of the converter feed of the electrical generator (3.1, 3.2) occurs, as a result of which its ancillary torque at least partly ceases to exist.

6. The method in accordance with Claim 5,
**characterised in that** those underwater powerplants (1.1), whose frequency converters, or whose components of the frequency converter, are used for purposes of executing a braking operation on another underwater powerplant of the energy park, are fitted with a water turbine (2.1, 2.2) that is designed to operate reliably at high running speeds, at least up to the runaway rotational speed.

7. The method in accordance with one of the preceding claims,
**characterised in that** the second frequency converter, or the component of the second frequency converter, is a separate frequency converter (13), which is not used in normal operation.

8. The method in accordance with Claim 7,
**characterised in that** the underwater powerplant (1.1) is part of an energy park, and additionally or alternatively at least one other second frequency converter, or one other component of a second frequency converter, is connected into the circuit with the separate frequency converter (13) for purposes of executing the braking operation of another underwater powerplant (1.2) of the energy park.

9. An underwater powerplant (1.1, 1.2) comprising:
A water turbine (2.1, 2.2) for purposes of absorbing kinetic energy from a flow of water;
An electrical generator (3.1, 3.2), whose generator rotor is connected in a torsionally rigid manner with the water turbine (2.1, 2.2);
A converter feed for the electrical generator (3.1, 3.2) with a first frequency converter (5.1, 5.2);
**characterised in that**,
the underwater powerplant (1.1, 1.2) comprises a coupling device (9), which during the braking operation synchronises at least one second frequency converter, or one component of a second frequency converter, with the first frequency converter (5.1, 5.2), and connects into the circuit of the converter feed to the electrical generator (3.1, 3.2) in order to generate, jointly with the first frequency converter (5.1, 5.2), a generator torque braking the water turbine (2.1, 2.2).

## Revendications

1. Procédé de fonctionnement d'une centrale immergée (1.1, 1.2) comportant une turbine à eau (2.1. 2.2) destinée à recevoir l'énergie cinétique provenant d'un courant d'eau;
un générateur électrique (3.1, 3.2) avec alimentation par convertisseur, dont le rotor de générateur est solidaire de la turbine à eau (2.1, 2.2); **caractérisé en ce qu'**en fonctionnement normal on utilise un premier convertisseur de fréquence (5.1, 5.2) pour fournir l'alimentation par convertisseur et qu'en mode de freinage au moins un second convertisseur de fréquence ou un composant partiel d'un second convertisseur de fréquence est connecté et synchronisé au premier convertisseur de fréquence (5.1, 5.2), de façon à obtenir, combiné à celui-ci, une alimentation par convertisseur du générateur électrique (3.1, 3.2), laquelle alimentation produit un couple de générateur freinant la turbine à eau (2.1, 2.2).

2. Procédé selon la revendication 1, **caractérisé en ce qu'**en fonctionnement normal la turbine à eau (2.1, 2.2) lorsque l'on atteint la charge nominale Pn pour limiter la puissance pénètre dans une plage de vitesse rotation supérieure à la vitesse de rotation optimale en terme de puissance nopt.

3. Procédé selon la revendication 2, **caractérisé en ce que** la totalité du second convertisseur de fréquence connecté en mode de freinage ou des composants partiels connectés du second convertisseur de fréquence est dimensionnée pour que le générateur électrique (3.1, 3.2) atteigne la puissance prévue au niveau de l'alimentation par convertisseur pour une vitesse de rotation optimale en terme de puissance.

4. Procédé selon l'une quelconque des revendications précédentes, **caractérisé en ce que** la centrale immergée (1.1,1.2) est partie intégrante d'un parc énergétique comprenant une pluralité de centrales immergées (1.1, 1.2), où le second convertisseur de fréquence connecté en mode de freinage ou bien le composant partiel connecté d'un second convertisseur de fréquence fournit en fonctionnement normal l'alimentation par convertisseur d'une autre centrale immergée du parc énergétique.

5. Procédé selon la revendication 4, **caractérisé en ce que** pour les centrales immergées (1.1, 1.2), comprenant un second convertisseur de fréquence ou bien un composant partiel d'un second convertisseur de fréquence pour freiner une autre centrale immergée, que l'alimentation par convertisseur du générateur électrique (3.1, 3.2) est interrompue, ce qui a pour effet de supprimer au moins partiellement son couple d'appui.

6. Procédé selon la revendication 5, **caractérisé en ce que** pour les centrales immergées (1.1), dont on utilise le convertisseur de fréquence ou les composants partiels du convertisseur de fréquence pour passer en mode de freinage pour une autre centrale immergée du parc énergétique, sont équipées d'au moins une turbine à eau (2.1, 2.2) constituée pour résister à une vitesse rapide jusqu'à la vitesse d'emballement.

7. Procédé selon l'une quelconque des revendications précédentes, **caractérisé en ce que** le second convertisseur de fréquence ou bien le composant partiel du second convertisseur de fréquence est un convertisseur de fréquence séparé (13), inutilisé en fonctionnement normal.

8. Procédé selon la revendication 7, **caractérisé en ce que** la centrale immergée (1.1) fait partie d'un parc énergétique et qu'en outre ou alternativement par rapport au convertisseur de fréquence séparé (13) au moins un autre second convertisseur de fréquence ou un autre composant partiel d'un second convertisseur de fréquence est connecté pour passer en mode de freinage d'une autre centrale immergée (1.2) du parc énergétique.

9. Centrale immergée (1.1, 1.2) comportant une turbine à eau (2.1, 2.2) destinée à recevoir l'énergie cinétique provenant d'un courant d'eau; un générateur électrique (3.1, 3.2), dont le rotor de générateur est solidaire de la turbine à eau (2.1, 2.2);
une alimentation par convertisseur pour le générateur électrique (3.1, 3.2) pourvue d'un premier convertisseur de fréquence (5.1, 5.2); **caractérisé en ce que** la centrale immergée (1.1, 1.2) comprend un dispositif d'accouplement (9), qui en mode de freinage synchronise au moins un second convertisseur de fréquence ou un composant partiel d'un second convertisseur de fréquence au premier convertisseur de fréquence (5.1, 5.2) et le connecte à l'alimentation par convertisseur du générateur électrique (3.1, 3.2), pour générer en coopération avec le premier convertisseur de fréquence (5.1, 5.2) un couple de générateur freinant la turbine à eau (2.1, 2.2).
